(19) Europäisches Patentamt
European Patent Office
Office européen des brevets

(11) EP 1 652 693 B1

(12) **EUROPEAN PATENT SPECIFICATION**

(45) Date of publication and mention of the grant of the patent:
**19.12.2007 Bulletin 2007/51**

(51) Int Cl.:
***B60C 1/00*** *(2006.01)* ***C08K 5/34*** *(2006.01)*
***C08K 3/04*** *(2006.01)* ***C08L 21/00*** *(2006.01)*

(21) Application number: **05020726.5**

(22) Date of filing: **22.09.2005**

(54) **Rubber composition for run-flat tire and run-flat tire comprising the same**

Gummimischung für Notlaufreifen und Notlaufreifen, der diese enthält

Composition de caoutchouc pour pneumatique de roulage à plat et pneumatique de roulage à plat contenant celle-ci

(84) Designated Contracting States:
**DE FR GB**

(30) Priority: **27.10.2004 JP 2004312568**

(43) Date of publication of application:
**03.05.2006 Bulletin 2006/18**

(73) Proprietor: **SUMITOMO RUBBER INDUSTRIES, LTD.**
**Kobe-shi, Hyogo-ken (JP)**

(72) Inventor: **Hochi, Kazuo**
**c/o Sumitomo Rubber Industries, Ltd.**
**Chuo-ku**
**Kobe-shi**
**Hyogo-ken (JP)**

(74) Representative: **Manitz, Finsterwald & Partner GbR**
**Postfach 31 02 20**
**80102 München (DE)**

(56) References cited:
**EP-A- 0 424 143**
**EP-A- 0 864 608**
**EP-A- 1 207 179**
**US-A- 4 421 899**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 652 693 B1

## Description

The present invention relates to a run-flat tire comprising a rubber composition for a run-flat tire.

Currently, a run-flat tire having a reinforcing layer with a high degree of hardness arranged at the inside of a part of a sidewall has been put to practical use and a car can run at a certain distance even in a situation of losing an air pressure caused by puncture. Accordingly, it does not become necessary to always have a spare tire and it can be expected that a weight of a whole vehicle decreases. However, there are limitations for a speed and a distance in run-flat driving at puncture and further improvement in durability of a run-flat tire is expected.

Also, since a reinforcing layer of a run-flat tire repeats large deformation in running at a low inner pressure and a run-flat tire supports load of a vehicle upon the reinforcing layer in a part of its sidewall, the reinforcing layer generates heat. Heat generation in the reinforcing layer accelerates deterioration of a rubber and, finally, the rubber gets to be destroyed. Therefore, it is desirable that a reinforcing layer has a high degree of hardness and, also, a low heat-build up.

It is known that sulfur generally employed for crosslinking a rubber cleaves and re-crosslinks by heat, accordingly, a crosslinking density becomes large, flexibility of a rubber is impaired and strength at break is lowered. From this point, it is required for a vulcanizing agent to have a small lowering of substances

It is known that morpholine disulfide, which is a sulfur containing compound, is used in place of sulfur, but strength at break of morpholine disulfide is inferior to that of sulfur since morpholine disulfide has less polysulfide bonds compared to sulfur and flexibility of a rubber becomes inferior due to crosslinking by releasing active sulfur.

US 4,421,899 discloses a steel cord belted radial pneumatic tire comprising steel cords and a rubber composition comprising a polysulfide polymer having a polyether bond therein in an amount of 2.0 to 10 parts by weight per 100 parts by weight of a rubber hydrocarbon consisting of at least 30 % by weight of a rubber selected from the group consisting of natural rubber, synthetic polyisoprene rubber and blends thereof used as a coating rubber for the belt and/or carcass ply.

EP 0 424 143 A2 describes a polysulfide polyether, a method of producing such a polysulfide polyether and several polymer compositions containing such a polysulfide polyether.

EP 1 207 179 A1 discloses a high hardness rubber composition comprising between 2 and 8 parts by weight of sulfur and at least 5 parts by weight of two or more vulcanization accelerators based on 100 parts by weight of a rubber component, wherein at least one of said accelerators is a sulfen amide accelerator.

Japanese Unexamined Patent Publication No. 10-251456 describes a rubber composition comprising polysulfide polyether silane, but there was a problem that sufficient run-flat performance can not be obtained even if the rubber composition is used for a reinforcing layer of a run-flat tire.

It is an object of the present invention to provide run-flat tire comprising a rubber composition which can have compatibility of low heat build-up with a high degree of hardness and improve durability of a run-flat tire and the run-flat tire comprising the same.

The present invention relates to a run-flat tire having a reinforcing layer comprising a rubber composition containing 10 to 100 parts by weight of carbon black and at least 3 parts by weight of a compound satisfying the formula:

$$-(R\text{-}S_x)_n-$$

(wherein R is $(CH_2\text{-}CH_2\text{-}O)_m\text{-}CH_2\text{-}CH_2$, x is an integer of 3 to 6, n is an integer of 10 to 400 and m is an integer of 2 to 5), based on 100 parts by weight of a rubber component.

In the reinforcing layer in the run-flat tire, loss elastic modulus E", complex elastic modulus E* and strength at break $T_B$ satisfy the following formulas:

$$E''/(E^*)^2 \leq 7.0 \times 10^{-9}\,Pa^{-1}$$

$$T_B \geq 10\,MPa.$$

The rubber composition for a run-flat tire of the present invention comprises a rubber component, carbon black and a compound (hereinafter referred to as compound (1)) satisfying the following formula:

$$-(R\text{-}S_x)_n-$$

(wherein R is $(CH_2\text{-}CH_2\text{-}O)_m\text{-}CH_2\text{-}CH_2$, x is an integer of 3 to 6, n is an integer of 10 to 400 and m is an integer of 2 to 5).

As a rubber component, examples are a natural rubber (NR) and diene synthetic rubbers such as a butadiene rubber (BR), a syndiotactic-1, 2-polybutadiene (1, 2BR), a styrene-butadiene copolymer rubber (SBR), an isoprene rubber (IR), an acrylonitrile-butadiene copolymer rubber (NBR), a chloroprene rubber (CR), a styrene-isoprene-butadiene copolymer rubber (SIBR), a styrene-isoprene copolymer rubber and an isoprene-butadiene copolymer rubber. These can be used solely or in a combination use of at least two kinds. Among those, it is preferable to use BR or a combination of BR and 1, 2BR as a rubber component since satisfying low heat build-up is possible. Also, as a rubber component, it is preferable to use NR since improving strength of a rubber against breaking is possible.

As a rubber component, it is the most preferable to use in a combination of NR, BR and 1, 2BR.

The nitrogen adsorbing-specific surface area ($N_2SA$) of carbon black in the present invention is preferably at least 30 $m^2/g$ and more preferably at least 35 $m^2/g$. When $N_2SA$ is less than 30 $m^2/g$, reinforceability is insufficient and it tends that sufficient durability cannot be obtained. Also, $N_2SA$ is preferably at most 100 $m^2/g$, more preferably at most 90 $m^2/g$, and further more preferably at most 80 $m^2/g$. When $N_2SA$ is more than 100 $m^2/g$, heat generation becomes large.

Dibutyl phthalate oil absorption (DBP) of carbon black is preferably at least 50 ml/100 g and more preferably 80 ml/100 g. When DBP is less than 50 ml/100 g, it becomes difficult to obtain sufficient reinforceabillity.

The amount of carbon black is at least 10 parts by weight, preferably 20 parts by weight and more preferably at least 30 parts by weight based on 100 parts by weight of a rubber component. When the amount is less than 10 parts by weight, sufficient strength can not be obtained. Also, the amount of carbon black is at most 100 parts by weight, preferably at most 70 parts by weight and more preferably at most 60 parts by weight based on 100 parts by weight of a rubber component. When the amount is more than 100 parts by weight, kneading and extruding a rubber become hard in a preparation of the rubber composition.

Carbon black is used as a reinforcing agent and other reinforcing agents such as silica, calcium carbonate, aluminum hydroxide and clay can be used.

The Compound (1) in the present invention satisfies the following formula:

$$-(R-S_x)_n-$$

(wherein R is $(CH_2-CH_2-O)_m-CH_2-CH_2$, x is an integer of 3 to 6, n is an integer of 10 to 400 and m is an integer of 2 to 5). In the present invention, the Compound (1) is used as a vulcanizing agent and, as the other vulcanizing agents, it is possible to use sulfur, preferably insoluble sulfur, in a combination use therewith.

In the formula, x is an integer of 3 to 6 and preferably an integer of 3 to 5. When x is less than 3, vulcanization tends to be delayed, and when x is more than 6, a preparation of the rubber composition becomes hard.

In the formula, n is an integer of 10 to 400, preferably an integer of 10 to 300. When n is less than 10, the Compound (1) vaporized easily and its handling becomes hard, and when n is more than 400, compatibility with a rubber is decreased.

In the formula, m is an integer of 2 to 5 and preferably an integer of 2 to 4 and more preferably an integer of 2 to 3. When m is less than 2, bending performance tends to be lowered, and when m is more than 5, hardness of a rubber tends to be insufficient.

The amount of Compound (1) is at least 3 parts by weight and preferably at least 5 parts by weight based on 100 parts by weight of the rubber component. When the amount is less than 3 parts by weight, sufficient run-flat performance can not be obtained. Also, the amount of the above-described compound is preferably at most 30 parts by weight and more preferably at most 20 parts by weight based on 100 parts by weight of the rubber component. When the amount is more than 30 parts by weight, required hardness tends to be hardly obtained.

Compound (1) can introduce the following crosslinking unit to a rubber and inhibit reversion drastically without giving influence to a vulcanization speed and scorch by compounding Compound (1) to the rubber composition of the run-flat tire of the present invention. Also, it is possible to obtain heat resistance of a rubber composition which can not be obtained from general sulfur crosslinking and resistance against dynamic stress. Further, since bloom hardly occurs, an excellent rubber composition in terms of its appearance can be obtained.

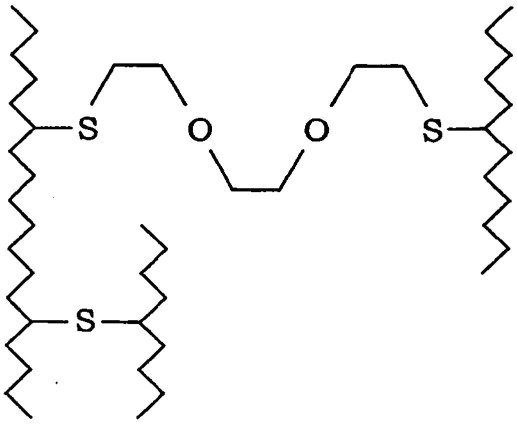

Also, the rubber composition of the run-flat tire of the present invention can contain zinc oxide, wax, stearic acid, an antioxidant, a vulcanization accelerator and the like, which is used for an usual rubber composition, in the range of not damaging effects of the present invention.

The run-flat tire of the present invention has a reinforcing layer comprising the aforementioned rubber composition.

Herein, the reinforcing layer is a lining strip layer arranged in the inside of a sidewall of the run-flat tire. Since the reinforcing layer exists in the run-flat tire, the run-flat tire can support a vehicle even in a situation of losing an air pressure and excellent run-flat durability can be given.

When the rubber composition of the run-flat tire of the present invention is used for a reinforcing layer, loss elastic modulus E" and complex elastic modulus E* of the reinforcing layer preferably satisfy the following formula:

$$E''/(E^*)^2 \leq 7.0\times10^{-9}Pa^{-1}$$

Also, $E''/(E^*)^2$ is preferably at most $6.8\times10^{-9}Pa^{-1}$. When $E''/(E^*)^2$ is more than $7.0\times10^{-9}Pa^{-1}$, heat generation becomes large at run-flat driving and heat deterioration of a rubber is accelerated, which leads a rubber to destroy.

When the rubber composition of the run-flat tire of the present invention is used for a reinforcing layer, strength at break $T_B$ of the reinforcing layer is preferably at least 10 MPa and more preferably at least 12 MPa. When $T_B$ is less than 10 MPa, the reinforcing layer is destroyed by bending due to load of a vehicle at run-flat driving, thus, run-flat performance tends to be remarkably in short.

EXAMPLES

The present invention is explained in details in Examples, but it is not limited only thereto.

Hereinafter, various chemicals used in Examples are described below.

NR: RSS#3
BR1: VCR412 available from Ube Industries, Ltd.
BR2: BR 150L available from Ube Industries, Ltd.
Carbon black1: DIABLACK E ($N_2SA$: 41 $m^2/g$, DBP: 115 ml/100 g) available from Mitsubishi Chemical Corporation
Carbon black2: DIABLACK H ($N_2SA$: 79 $m^2/g$, DBP: 105 ml/100 g) available from Mitsubishi Chemical Corporation
Stearic acid: STEARIC ACID CAMELLIA available from NOF Corporation
Zinc oxide: Zinc oxide No.2 available from Mitsui Mining And Smelting Co., Ltd.
Antioxidant: Antigene 6C available from Sumitomo Chemical Co., Ltd.
Insoluble sulfur: Mu-cron available from SHIKOKU CORPORATION
Compound (1): 2OS4 available from Kawaguchi Chemical Industry Co., LTD. (m=2, x=4 and n=200)

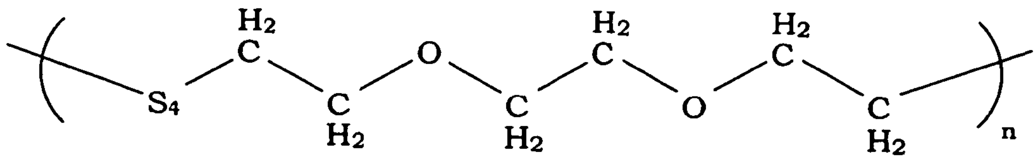

Vulcanization accelerator: NOCCELER NS available from OUCHISHINKO CHEMICAL INDUSTRIAL CO., LTD.

EXAMPLES 1 to 2 and COMPARATIVE EXAMPLES 1 to 3

The components other than Compound (1), insoluble sulfur and a vulcanization accelerator were kneaded at 150°C for 4 minutes according to the composition content of Table 1. Insoluble sulfur and the vulcanization accelerator were added to the obtained kneaded product and the mixture was kneaded at 80°C for 3 minutes to obtain the rubber composition.

As a reinforcing layer of the inside of a sidewall, a run-flat tire with a size of 215/45Z R17, in which a lining strip layer comprising each rubber composition of Examples and Comparative Examples was arranged, was prepared and each evaluation in the following was conducted.

(Strength at break $T_B$)

A 2 mm thickness sheet was cut out from the lining strip layer of the run-flat tire and the evaluation of $T_B$ (MPa) was conducted, according to JIS K6251.

($E''/(E^*)^2$)

Loss elastic modulus E" and complex elastic modulus E* were measured to calculate $E''/(E^*)^2$ by using the viscoelasticity spectrometer made by Iwamoto Corporation at a measurement temperature of 70°C under the condition of 10 % of initial strain, ±1 % of dynamic strain and 10Hz of frequency.

(Run-flat performance)

A driving distance is compared wherein a tire is destroyed by running at the speed of 80 km/h on a drum at an air pressure of 0 kPa. The indexation was conducted respectively, regarding Comparative Example 1 as the standard (100). The larger the index is, the more excellent run-flat durability is.

Each evaluation result is shown in Table 1.

TABLE 1

| | Ex. 1 | Ex.2 | Com. Ex. 1 | Com. Ex. 2 | Com. Ex. 3 |
|---|---|---|---|---|---|
| Composition (part by weight) | | | | | |
| NR | 60 | 60 | 60 | 60 | 60 |
| BR1 | 20 | 20 | 20 | 20 | 20 |
| BR2 | 20 | 20 | 20 | 20 | 20 |
| Carbon black 1 | 45 | 45 | 45 | 45 | 45 |
| Carbon black 2 | 10 | 10 | 10 | 10 | 10 |
| Stearic acid | 2 | 2 | 2 | 2 | 2 |
| Zinc oxide | 3 | 3 | 3 | 3 | 3 |
| Antioxidant | 1 | 1 | 1 | 1 | 1 |
| Insoluble sulfur | - | 3 | 5.5 | 3.7 | - |
| Compound (1) | 11 | 5 | - | 2.6 | 2.6 |
| Vulcanization accelerator | 2 | 2 | 2 | 2 | 2 |

(continued)

| | | | | | |
|---|---|---|---|---|---|
| Evaluation result | | | | | |
| $T_B$ [MPa] | 15.1 | 14.5 | 14.8 | 14.3 | 15.7 |
| $E''/(E^*)^2 [10^{-9} Pa^{-1}]$ | 6.7 | 6.6 | 6.5 | 6.5 | 7.3 |
| Run-flat performance | 115 | 109 | 100 | 100 | 74 |

According to the present invention, there can be provided a run-flat tire having a reinforcing layer comprising a rubber composition which has compatibility of low heat build-up with a high degree of hardness by compounding a specific compound in the rubber composition containing a rubber component and carbon black. Also, durability of the run-flat tire can be improved by using the rubber composition as a reinforcing layer of the run-flat tire.

## Claims

**1.** A run-flat tire having a reinforcing layer comprising a rubber composition comprising
10 to 100 parts by weight of carbon black and
at least 3 parts by weight of a compound satisfying the formula represented in the following:

$$-(R-S_x)_n-$$

(wherein R is $(CH_2-CH_2-O)_m-CH_2-CH_2$, x is an integer of 3 to 6, n is an integer of 10 to 400 and m is an integer of 2 to 5) based on 100 parts by weight of a rubber component.

**2.** The run-flat tire of Claim 1, wherein loss elastic modulus E", complex elastic modulus E* and strength at break $T_B$ satisfy the formulae represented in the following:

$$E''/(E^*)^2 \leq 7.0x10^{-9} Pa^{-1}$$

$$T_B \geq 10MPa$$

in the reinforcing layer of the run-flat tire.

## Patentansprüche

**1.** Notlaufreifen mit einer Verstärkungsschicht enthaltend eine Gummizusammensetzung enthaltend
10 bis 100 Gewichtsteile Ruß und
wenigstens 3 Gewichtsteile einer Verbindung, welche die nachfolgende Formel erfüllt:

$$-(R-S_x)_n-$$

(worin R $(CH_2-CH_2-O)_m-CH_2-CH_2$ ist, x eine ganze Zahl zwischen 3 und 6 ist, n eine ganze Zahl zwischen 10 und 400 ist und m eine ganze Zahl zwischen 2 und 5 ist)
bezogen auf 100 Gewichtsteile einer Kautschukkomponente.

**2.** Notlaufreifen nach Anspruch 1, wobei das elastische Verlustmodul E", das komplexe Elastizitätsmodul E* und die Bruchdehnung $T_B$ in der Verstärkungsschicht des Notlaufreifens die nachfolgend wiedergegebene Formel erfüllen:

$$E''/(E^*)^2 \leq 7{,}0 \times 10^{-9} Pa^{-1}$$

$$T_B \geq 10\ MPa.$$

## Revendications

1. Pneu à flancs renforcés comportant une couche de renfort comprenant une composition de caoutchouc comprenant 10 à 100 parties en poids de noir de carbone et
au moins 3 parties en poids d'un composé satisfaisant la formule représentée dans ce qui suit :

$$-(R-S_x)_n-$$

(où R est $(CH_2-CH_2-O)_m-CH_2-CH_2$, x est un entier de 3 à 6, n est un entier de 10 à 400 et m est un entier de 2 à 5) sur la base de 100 parties en poids d'un composant de caoutchouc.

2. Pneu à flancs renforcés selon la revendication 1, dans lequel le module élastique de perte E", le module élastique complexe E* et la résistance à la rupture $T_B$ satisfont les formules représentées dans ce qui suit :

$$E''/(E^*)^2 \leq 7{,}0 \times 10^{-9}\ Pa^{-1}$$

$$T_B \geq 10\ MPa$$

dans la couche de renfort du pneu à flancs renforcés.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4421899 A
- EP 0424143 A2
- EP 1207179 A1
- JP 10251456 A